# EUROPÄISCHE PATENTANMELDUNG

(11) **EP 2 023 088 A2**
(43) Veröffentlichungstag der Anmeldung: **11.02.2009**
(21) Anmeldenummer: 08011492.9
(22) Anmeldetag: 25.06.2008
(51) Int. Cl.: G01C 21/36

(54) **Verfahren zum Betrieb eines Navigationssystems**

(30) Priorität: 08.08.2007 DE 102007037386
(71) Anmelder: Navigon AG, 20251 Hamburg (DE)
(72) Erfinder: Joachim, Steffen, 97941 Tauberbischofsheim (DE)
(74) Vertreter: von den Steinen, Axel

(57) **Zusammenfassung**

Die Erfindung betrifft ein Verfahren zum Betrieb eines Navigationssystems mit folgenden Verfahrensschritten:
a) Berechnung und Anzeige einer Kartenansicht (21, 24) an einer Anzeigeeinrichtung, wobei die Kartenansicht (21, 24) zumindest einen Ausschnitt eines geographisches Gebiets darstellt;
b) Selektion von den hervorzuhebenden Orten (Points of Interest POI), die im Bereich des dargestellten geographischen Gebiets liegen und in der Kartenansicht jeweils einem POI-Symbol (02) zugeordnet sind, aus einer Datenbank;
c) Darstellung der POI-Symbole (02) in der Kartenansicht(21, 24), wobei POI-Symbole (02), die hervorzuhebende Orte innerhalb eines gemeinsamen Nahbereichs symbolisieren, als gemeinsames Kombinationssymbol (01, 07, 10, 15, 16, 27) dargestellt werden, so dass jeweils ein Kombinationssymbol (01, 07, 10, 15, 16, 27) mehrere POI-Symbole (02) repräsentiert, wobei das Kombinationssymbol (01, 07, 10, 15, 16, 27) zumindest einen Anzeigebereich (03, 11) aufweist, in dem zumindest ein POI-Symbol (02) darstellbar ist, wobei die dem Kombinationssymbol (01, 07, 10, 15, 16, 27) zugeordneten POI-Symbole (02) zeitlich wechselnd im Anzeigebereich (03, 11) angezeigt werden.

## Beschreibung

Die Erfindung betrifft ein Verfahren zum Betrieb eines Navigationssystems nach dem Oberbegriff des Anspruchs 1.

Bei bekannten Navigationssystemen, beispielsweise mobilen Navigationsgeräten für Kraftfahrzeuge, ist es gattungsgemäß üblich, dass an einer Anzeigeeinrichtung eine Kartenansicht dargestellt wird. Diese Kartenansicht stellt einen Ausschnitt eines geografischen Gebiets dar, beispielsweise unter Einblendung des dort vorhandenen Straßennetzes, um dem Benutzer einen entsprechenden Überblick zu geben.

Gattungsgemäß ist in dem Navigationssystem zusätzlich eine Datenbank vorgesehen, in der hervorzuhebende Orte, die nachfolgend als "Points of Interest" (POI) bezeichnet werden sollen, gespeichert sind. Bei derartigen Points of Interest kann es sich beispielsweise um Polizeistationen, Krankenhäuser, Tankstellen, Raststätten, Parkplätze oder Ähnliches handeln. Diese Points of Interest können durch so genannte POI-Symbole in der Kartenansicht symbolisierend dargestellt werden. Beim Aufbau einer Kartenansicht werden aus der Datenbank die Points of Interest selektiert, die in dem in der Kartenansicht darzustellenden Gebiet liegen.

Die selektierten POI-Symbole werden dann in der Kartenansicht angezeigt.

Abhängig vom Maßstab der Kartenansicht stellt sich dabei das Problem, dass mehrere Points of Interest in einem gemeinsamen Nahbereich liegen, d.h. eng benachbart angeordnet sind. Aufgrund dieser engen Benachbarung der Points of Interest überlappen die entsprechend zugeordneten POI-Symbole in der Kartenansicht und überdecken sich entsprechend. Die Erkennbarkeit der POI-Symbole ist in diesen Fällen nicht mehr gewährleistet.

Zur Lösung dieses Problems ist aus der DE 102 30 479 A1 und der US 7,076,741 B2 der Einsatz vom Kombinationssymbolen bekannt. In Fällen, in denen mehrere Points of Interest in einem gemeinsamen Nahbereich liegen und die zugeordneten POI-Symbole deshalb nicht ohne Überlappung darstellbar sind, wird statt der einzelnen POI-Symbole ein Kombinationssymbol angezeigt. Dieses Kombinationssymbol zeigt dem Benutzer an, dass an der entsprechenden Stelle mehrere Points of Interest vorhanden sind.

Um die dem Kombinationssymbol zugeordneten Informationen über die Points of Interest zu erhalten, muss der Benutzer dann das Kombinationssymbol ansteuern, beispielsweise durch Berühren eines Touch-Screen.

Nach Ansteuerung des Kombinationssymbols werden die im Kombinationssymbol gespeicherten Informationen zu den einzelnen dem Kombinationssymbol zugeordneten Points of Interest nebeneinander angezeigt.

Nachteilig an dieser Art der Anzeige ist es, dass der Benutzer erst nach entsprechender Benutzerinteraktion die dem Kombinationssymbol zugeordneten POI-Symbol-Informationen angezeigt bekommt. Dadurch wird der Benutzerkomfort beschränkt. Außerdem stellt diese Art der Anzeige ein mögliches Sicherheitsrisiko dar, da der Benutzer bei Benutzung des Navigationssystems in einem Kraftfahrzeug für die Durchführung der Ansteuerung des Kombinationssymbols kurzzeitig vom Verkehr abgelenkt wird.

Ausgehend von diesem Stand der Technik ist es deshalb Aufgabe der vorliegenden Erfindung, ein neues Verfahren zum Betrieb eines Navigationssystems unter Verwendung von Kombinationssymbolen vorzuschlagen, mit dem der Benutzerkomfort verbessert und die Fahrsicherheit erhöht werden kann.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, am Kombinationssymbol einen Anzeigebereich vorzusehen, der keinen festen Bildinhalt hat. Die Größe des Anzeigebereichs ist dabei zumindest so groß, dass zumindest ein POI-Symbol im Anzeigebereich dargestellt werden kann. Bei Anzeige der Kartenansicht werden die dem Kombinationssymbol zugeordneten POI-Symbole dann zeitlich wechselnd im Anzeigebereich angezeigt. Das heißt die einzelnen POI-Symbole werden z.B. rollierend am Anzeigebereich angezeigt. Durch diese zeitliche Staffelung der Anzeige der einzelnen POI-Symbole ist gewährleistet, dass für die Anzeige mehrerer POI-Symbole nur ein minimaler Ausschnitt der Kartenansicht zur Verfügung gestellt werden muss. Zugleich erhält der Benutzer jedoch in zeitlich gestreckter Form alle Informationen, die dem Kombinationssymbol zugeordnet sind, ohne dass dazu eine Benutzerinteraktion des Benutzers erforderlich ist. Somit werden der Benutzungskomfort und die Fahrsicherheit erhöht, da der Benutzer ohne eigene Steuermaßnahmen alle Informationen des Kombinationssymbols in kompakter Darstellungsform angezeigt bekommt.

Bei Durchführung des erfindungsgemäßen Verfahrens ist es nicht zwingend, dass die zeitlich wechselnde Anzeige der POI-Symbole am Anzeigebereich des Kombinationssymbols permanent erfolgt. Nach einer bevorzugten Ausführungsform ist deshalb vorgesehen, dass der Anzeigebereich des Kombinationssymbols abschaltbar ist. Die Abschaltung des Anzeigebereichs bedeutet dabei lediglich, dass im abgeschalteten Zustand keine wechselnde Anzeige von POI-Symbolen erfolgt. Dagegen kann ein einzelnes POI-Symbol im abgeschalteten Zustand dauerhaft angezeigt werden. Alternativ dazu ist es auch denkbar, dass bei abgeschaltetem Anzeigebereich eine Symbolfläche, beispielsweise eine einfarbige Fläche, am Kombinationssymbol eingeblendet wird.

In welcher Weise die Abschaltung des Anzeigebereichs erfolgt, ist dabei grundsätzlich beliebig. So kann es vorgesehen sein, dass der Benutzer durch Betätigung eines entsprechenden Betätigungselements, beispielsweise einer Taste oder eines bestimmten Bereichs im Touch-Screen, den Anzeigebereich von einem oder mehreren Kombinationssymbolen abschalten kann. Alternativ bzw. additiv dazu kann die Abschaltung auch durch eine entsprechende Konfigurierung des Navigationssystems erfolgen. Auch ist es denkbar, dass die Kombinationssymbole in ihrem Grundzustand, d.h. nach einem Neustart des Navigationssystems, zunächst abgeschaltet sind und erst durch nachfolgende Ereignisse, beispielsweise eine entsprechende Benutzerinteraktion, eingeschaltet werden.

In welcher Weise die POI-Symbole zeitlich wechselnd angezeigt werden, ist grundsätzlich beliebig. In der einfachsten Variante werden die POI-Symbole periodisch rollierend nacheinander eingeblendet. Um eine optisch ansprechendere Anzeige zu erreichen, ist es jedoch besonders vorteilhaft, wenn die POI-Symbole bei ihrem jeweiligen Wechsel mit geeigneten Überblendverfahren überblendet werden. Das Überblenden kann dabei in der Art eines Umklappens der einzelnen POI-Symbole, in der Art eines horizontalen bzw. vertikalen Durchlaufens der einzelnen POI-Symbole und/oder in der Art eines Morphing von POI-Symbol zu POI-Symbol erfolgen.

Um bestimmte Anzeigeeffekte auszulösen, ist es weiterhin vorteilhaft, wenn über die zeitlich wechselnde Anzeige der POI-Symbole hinaus eine Möglichkeit besteht, dass die Darstellung des Kombinationssymbols und/oder die Darstellung der dem Kombinationssymbol zugeordneten POI-Symbole durch Ansteuerung der POI-Symbole beeinflussbar ist.

Die Ansteuerung des Kombinationssymbols kann dabei besonders einfach und zielgenau durch Betätigen eines entsprechend vorgesehenen Betätigungselements, beispielsweise einer Taste, durch Anklicken mit einem Mauszeiger oder durch Berühren eines Touch-Screen durch den Benutzer erfolgen.

Alternativ zu einer derartigen Ansteuerung durch Benutzerinteraktion ist es insbesondere bei mobilen Navigationsgeräten vorteilhaft, wenn die Ansteuerung des Kombinationssymbols auch in Abhängigkeit der aktuellen Position, wie sie vom Navigationsgerät festgestellt wird, erfolgen kann. Sobald das Navigationsgerät an den Nahbereich angenähert wird, der die dem Kombinationssymbol zugeordneten Points of Interest enthält, kann eine automatische Ansteuerung des Kombinationssymbols ohne direkte Benutzerinteraktion ausgelöst werden. Dadurch kann insbesondere erreicht werden, dass die im Kombinationssymbol vereinigten Informationen automatisch dann in breiterer Form dargestellt werden, wenn sich der Benutzer dem entsprechenden Nahbereich des Kombinationssymbols annähert. Auch ist es denkbar, dass die rollierende Darstellung der POI-Symbole in Abhängigkeit von der Fahrzeugposition beeinflusst wird. Beispielsweise kann die zeitliche Abfolge der POI-Symbole umso schneller sein, je näher die aktuelle Position dem Kombinationssymbol kommt.

In welcher Art die Anzeige des Kombinationssymbols bzw. der dem Kombinationssymbol zugeordneten POI-Symbole bei Ansteuerung beeinflusst wird, ist grundsätzlich beliebig. Nach einer ersten Variante ist vorgesehen, dass die Anzeigebereiche der Kombinationssymbole in einem Grundzustand abgeschaltet sind. Erst durch Ansteuerung des Kombinationssymbols, beispielsweise durch einen Mausklick, oder durch Annäherung der aktuellen Position an den Nahbereich des Kombinationssymbols wird die erfindungsgemäße zeitlich wechselnde Anzeige der POI-Symbole im Anzeigebereich des Kombinationssymbols gestartet.

Alternativ bzw. additiv dazu kann es auch vorgesehen sein, dass bei Ansteuerung des Kombinationssymbols mehrere dem Kombinationssymbol zugeordnete POI-Symbole gleichzeitig nebeneinander angezeigt werden. Nähert sich die aktuelle Position eines Navigationsgerätes beispielsweise dem Nahbereich eines Kombinationssymbols an, können auf diese Weise automatisch alle einzelnen POI-Symbole, die dem Kombinationssymbol zugeordnet sind, nebeneinander angezeigt werden, um den Benutzer vollständig über die Möglichkeiten an der entsprechenden Lokalität zu informieren. Auch durch direkte Benutzerinteraktion ist es denkbar, eine entsprechende Entfaltung des Kombinationssymbols zu bewirken.

Die Art der Darstellung des Kombinationssymbols ist in vielerlei Darstellungsvarianten denkbar. Um dem Benutzer unmittelbar einen intuitiven Eindruck davon zu geben, dass das Kombinationssymbol mehrere POI-Symbole repräsentiert, ist es besonders vorteilhaft, wenn das Kombinationssymbol neben dem eigentlichen Anzeigebereich zur zeitlich wechselnden Anzeige der POI-Symbole ein Stapelsymbol umfasst. Dieses Stapelsymbol ist grafisch so zu gestalten, dass es einen Stapel mit zumindest einer Tafel symbolisiert. Dies kann beispielsweise durch einen entsprechenden zeitlichen Versatz einzelner Tafelsymbole im Stapelsymbol erreicht werden. Durch die kombinierte Anzeige des Anzeigebereichs und des Stapelsymbols lassen sich Kombinationssymbole gestalten, aus denen der Benutzer intuitiv erkennen kann, dass die am Anzeigebereich angezeigten POI-Symbole Teil einer Menge mehrerer POI-Symbole sind, die wiederum durch das Stapelsymbol symbolisiert werden.

Die Verwendung von Stapelsymbolen ermöglicht es außerdem, die Anzahl der durch das Kombinationssymbol repräsentierten POI-Symbole in intuitiv gut erkennbarer Weise zu codieren. Dazu wird die Anzahl der Tafeln in einem Stapelsymbol nicht fest vorgegeben, sondern die Anzahl der Stapelsymbole entspricht der Anzahl von POI-Symbolen, die dem Kombinationssymbol zugeordnet sind. Durch die entsprechende Änderung der Größe bzw. Dicke des Stapelsymbols erhält der Benutzer dann intuitiv einen Eindruck davon, wie viele Points of Interest im entsprechenden Nahbereich eng beieinander liegen. Hierbei sind auch Stapeldickenklassen denkbar, nach denen z.B. eine Anzahl von 8-10 POI-Symbolen durch die jeweils gleiche Stapeldicke repräsentiert wird.

Für die Anzeige von Kartenansichten werden an Navigationssystemen 2D-Ansichten und 3D-Ansichten unterschieden. Auch bei der 3D-Ansicht handelt es sich selbstverständlich um eine zweidimensionale Darstellung, die jedoch um einen bestimmten Winkel perspektivisch gekippt ist, um einen dreidimensionalen Seheindruck zu vermitteln. Sowohl 2D-Ansichten als auch 3D-Ansichten sind für die erfindungsgemäße Anzeige der Kombinationssymbole geeignet.

Erfolgt die Anzeige des Kombinationssymbols in einer 2D-Ansicht, so sollte der Anzeigebereich auf dem Stapelsymbol liegend angezeigt werden. Dadurch wird ein Seheindruck vermittelt, bei dem der Anzeigebereich gerade die oberste Tafel des Stapelsymbols bildet. Die übrigen Tafeln des Stapelsymbols werden von dem Anzeigebereich weitgehend überdeckt, so dass nur die überstehenden Ränder der weiter unten liegenden Tafeln erkennbar sind.

Wird das Stapelsymbol in einer gekippten 3D-Ansicht angezeigt, ist die liegende Anzeige des Anzeigebereichs auf dem Stapelsymbol nicht geeignet, da aufgrund der perspektivischen Darstellung dadurch die Erkennbarkeit verringert würde. Deshalb ist es bei gekippter 3D-Darstellung des Kombinationssymbols vorteilhaft, dass der Anzeigebereich auf dem Stapelsymbol stehend angezeigt wird, um trotz der perspektivischen Ansicht eine gute Erkennbarkeit des im Anzeigebereich dargestellten POI-Symbols zu gewährleisten.

Anders als bei der 2D-Ansicht ist es bei der 3D-Ansicht des Kombinationssymbols nicht zwingend, dass die einzelnen Tafeln des Stapelsymbols sich weitgehend überdecken und nur der überstehende Rand sichtbar ist. Soweit ein ausreichender Abstand zwischen den einzelnen Tafeln des Stapelsymbols vorhanden ist, ist es bei der 3D-Ansicht vielmehr auch möglich, die Oberseite der einzelnen Tafeln darzustellen. Nach einer bevorzugten Ausführungsform der Erfindung ist es deshalb vorgesehen, dass an den Tafeln des Stapelsymbols ebenfalls jeweils ein dem Kombinationssymbol zugeordnetes POI-Symbol angezeigt wird. Dies bedeutet mit anderen Worten, dass bei dieser Variante die Tafeln des Stapelsymbols nicht fest vorgegeben angezeigt werden, beispielsweise einfarbig, sondern entsprechend dem Anzeigebereich jeweils ein POI-Symbol eingeblendet werden kann. Das an den Tafeln eingeblendete POI-Symbol unterscheidet sich jedoch von dem am Anzeigebereich eingeblendeten POI-Symbol dadurch, dass die Tafeln lediglich perspektivisch dargestellt sind.

Die Art der zeitlichen Abfolge der einzelnen POI-Symbole zur Anzeige am Anzeigebereich des Kombinationssymbols ist grundsätzlich beliebig. Es sind dabei auch Varianten denkbar, bei denen die einzelnen POI-Symbole unterschiedlich lang angezeigt werden. Üblicherweise ist es jedoch vorteilhaft, wenn die POI-Symbole periodisch wechselnd am Anzeigebereich angezeigt werden, wobei die Anzeigedauer jedes einzelnen POI-Symbols so gewählt sein sollte, dass der Benutzer auch bei flüchtiger Betrachtung die Möglichkeit hat, die POI-Symbole abzulesen. Die Reihenfolge der POI-Symbole kann fest vorbestimmt sein, beispielsweise in Abhängigkeit bestimmter Kriterien. Alternativ dazu ist es auch denkbar, die Auswahl der anzuzeigenden POI-Symbole durch einen Zufallsgenerator durchführen zu lassen, um eine zufällige Reihenfolge zu erzeugen.

Eine besonders große Bedeutung hat die Verwendung von Kombinationssymbolen bei der Darstellung von Points of Interest, die gemeinsam in einem mehrstöckigen Gebäude, beispielsweise einem Hochhaus, untergebracht sind. In diesen Fällen kann es vorkommen, dass eine Vielzahl von POIs in der Kartenansicht an einer gemeinsamen Stelle angezeigt werden müssen. Erfolgt diese Anzeige erfindungsgemäß durch Verwendung eines Kombinationssymbols mit wechselnder Anzeige der dem Kombinationssymbol zugeordneten POI-Symbole, so ist es besonders vorteilhaft, wenn die zeitliche Reihenfolge der POI-Symbole der vertikalen Reihenfolge der POIs entspricht. Beispielsweise kann in der Reihenfolge der oberste Point of Interest als erstes POI-Symbol am Anzeigebereich angezeigt und dann gemäß der Anordnung in den Stockwerken von oben nach unten fortgeführt werden. Selbstverständlich ist es auch denkbar, dass die Reihenfolge von unten nach oben geordnet und die entsprechenden POI-Symbole zeitlich nacheinander angezeigt werden.

Alternativ bzw. additiv zu einer solchen unmittelbaren Sortierung der POI-Symbole ist es auch denkbar, dass den verschiedenen Points of Interest eine Darstellungspriorität zugeordnet ist. Die Anzeige der einzelnen POI-Symbole erfolgt dann in Abhängigkeit der Darstellungspriorität der jeweils zugeordneten Points of Interest. Die Darstellungspriorität kann dabei vom Nutzer vorgegeben werden, so dass bestimmte POI-Kategorien oder Einzel-POI-Symbole (z.B. solche, die im Adressbuch gespeichert sind) als erstes dargestellt sind. Durch die Darstellungspriorität kann auch bei nur durch ein Nutzer- oder Bewegungsereignis rollierenden POI-Darstellungen das POI-Symbol vorgegeben werden, welches angezeigt wird, wenn die POI-Darstellung nicht rolliert.

Zusätzlich ist vorgesehen, dass bei einem POI zusätzlich zu dem POI-Symbol noch Zusatzinformationen in der Form von Zusatzsymbolen, die beispielsweise auf Attribute des POI-Symbols hinweisen (24-h-Tankstelle, Firmenlogo), angezeigt werden. Auch hierauf lässt sich das Verfahren anwenden, indem diese Zusatzsymbole entweder ebenfalls zeitlich gestaffelt angezeigt werden, selbst wenn nur ein POI an der jeweiligen Position vorhanden ist, oder nur dann neben dem POI-Symbol dargestellt werden, wenn die rollierende Darstellung generell oder in diesem Kartenbereich aktiviert ist.

Verschiedene Aspekte der Erfindung sind in den Zeichnungen schematisch dargestellt und werden nachfolgend beispielhaft erläutert.

Es zeigen:
- Fig. 1: eine erste Ausführungsform eines Kombinationssymbols zur Verwendung in 2D-Ansicht;
- Fig. 2: eine zweite Ausführungsform eines Kombinationssymbols zur Verwendung in 2D-Ansicht;
- Fig. 3: eine erste Ausführungsform eines Kombinationssymbols zur Verwendung in 3D-Ansicht;
- Fig. 4: eine zweite Ausführungsform eines Kombinationssymbols zur Verwendung in 3D-Ansicht;
- Fig. 5: eine dritte Ausführungsform eines Kombinationssymbols zur Verwendung in 3D-Ansicht;
- Fig. 6: eine Kartenansicht mit mehreren Kombinationssymbolen in 2D-Ansicht;
- Fig. 7: eine Kartenansicht mit mehreren Kombinationssymbolen in 3D-Ansicht;
- Fig. 8: eine Kartenansicht eines mobilen Navigationsgerätes mit einem Kombinationssymbol in einem ersten Betriebszustand;
- Fig. 9: die Kartenansicht gemäß Fig. 8 in einem zweiten Betriebszustand.

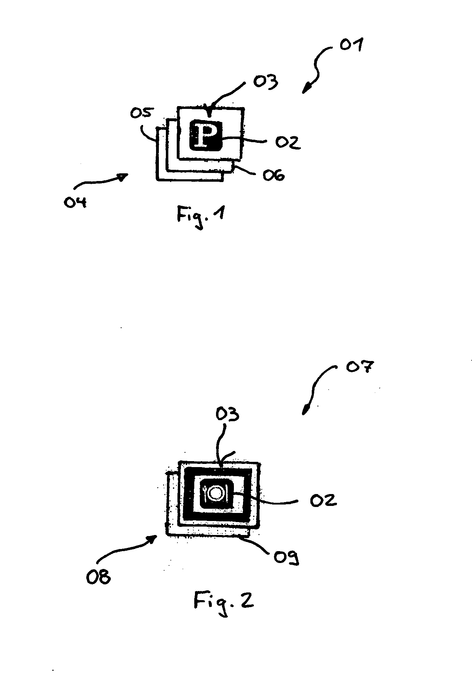

Fig. 1 zeigt ein Kombinationssymbol 01 zur gemeinsamen Darstellung mehrerer POI-Symbole 02. Das Kombinationssymbol 01 umfasst einen Anzeigebereich 03, an dem die verschiedenen, dem Kombinationssymbol 01 zugeordneten POI-Symbole zeitlich wechselnd angezeigt werden können. Weiter umfasst das Kombinationssymbol 01 ein Stapelsymbol 04, das im in Fig. 1 dargestellten Beispiel von zwei Tafeln 05 und 06 gebildet wird.

Da das Kombinationssymbol 01 zur Anzeige in 2D-Ansichten vorgesehen ist, ist der Anzeigebereich 03 liegend auf den Tafeln 05 und 06 des Stapelsymbols 04 angeordnet. Auf diese Weise überträgt der Anzeigebereich 03 die Tafeln 05 und 06 des Stapelsymbols 04 weitgehend vollständig und nur die Ränder der Tafeln 05 und 06 des Stapelsymbols 04 ragen über den Anzeigebereich 03 hinaus.

Fig. 2 zeigt eine zweite Ausführungsform 07 eines Kombinationssymbols, das ebenfalls zur Anzeige in 2D-Ansichten vorgesehen ist. Im Anzeigebereich 03 des Kombinationssymbols 07 können ebenfalls zeitlich wechselnd POI-Symbole 02 angezeigt werden. Das Stapelsymbol 08 des Kombinationssymbols 07 besteht im dargestellten Beispiel nur aus einer Tafel 09.

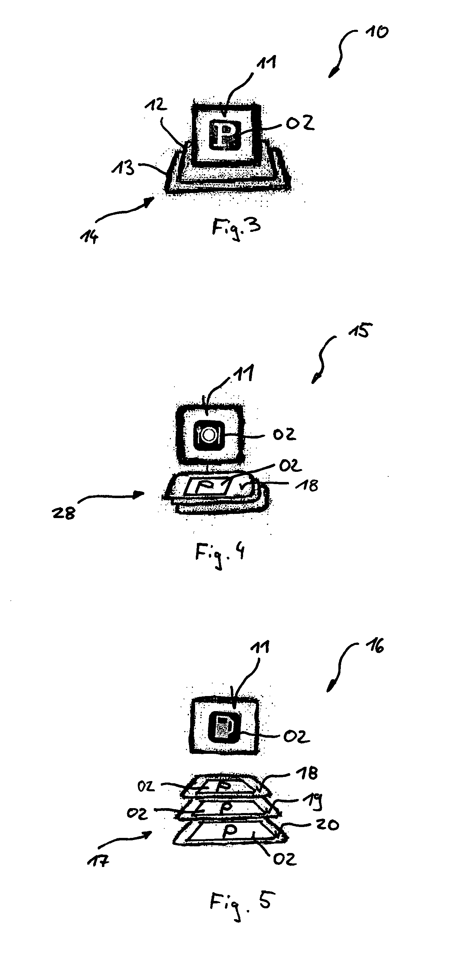

Fig. 3 zeigt eine weitere Ausführungsform 10 eines Kombinationssymbols, das zur Darstellung in 3D-Ansichten vorgesehen ist. Der Anzeigebereich 11 zur zeitlich wechselnden Anzeige der POI-Symbole 02 wird stehend auf den liegend dargestellten Tafeln 12 und 13 des Stapelsymbols 14 angezeigt.

Fig. 4 zeigt eine weitere Variante 15 eines Kombinationssymbols. Der Anzeigebereich 11 mit den zeitlich wechselnden POI-Symbolen 02 ist dabei so weit zu dem darunter liegend angezeigten Stapelsymbol 28 angeordnet, dass die Oberseite der obersten Tafel 18 des Stapelsymbols 28 gut erkennbar ist. An der Oberseite der obersten Tafel 18 des Stapelsymbols 28 werden bei Anzeige des Kombinationssymbols 15 ebenfalls zeitlich wechselnd POI-Symbole 02 eingeblendet.

Die in Fig. 5 dargestellte Ausführungsform 16 eines Kombinationssymbols mit dem Anzeigebereich 11 zur Anzeige von POI-Symbolen 02 weist ein Stapelsymbol 17 auf. Bei diesem Stapelsymbol 17 ist der Abstand zwischen den Tafeln 18, 19 und 20 so groß, dass auch die Oberseiten der unteren Tafeln 19 und 20 gut erkennbar sind. Somit wird ermöglicht, dass an allen Tafeln 18, 19 und 20 des Stapelsymbols 17 jeweils POI-Symbole 02 angezeigt werden.

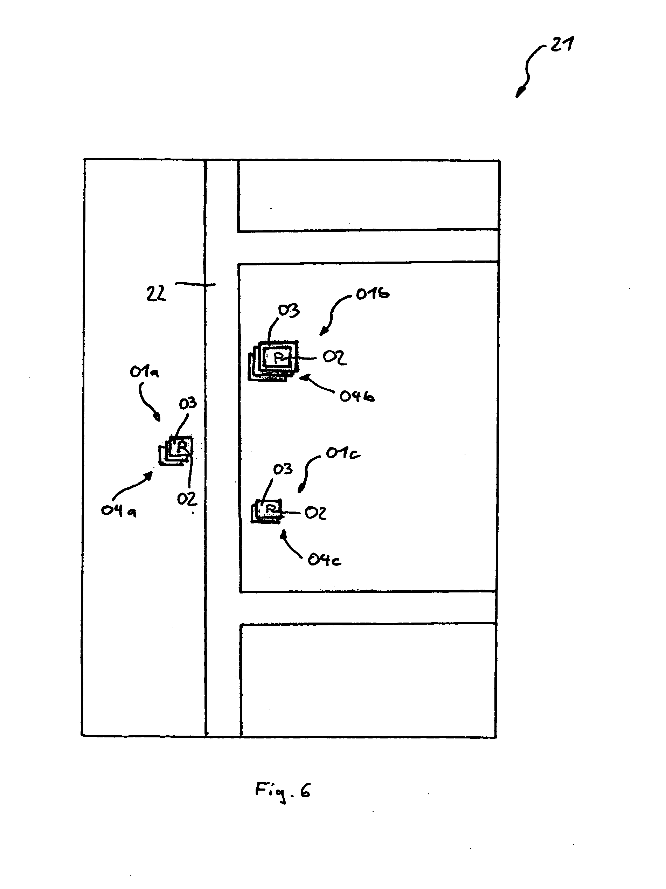

Fig. 6 zeigt beispielhaft in einer 2D-Darstellung eine Kartenansicht 21, wie sie beispielsweise am LCD-Bildschirm eines mobilen Navigationsgeräts angezeigt werden könnte. In der Kartenansicht 21 werden die im dargestellten geografischen Gebiet vorhandenen Straßen 22 angezeigt. Die an den Straßen 22 vorhandenen Points of Interest sind so zahlreich, dass die verschiedenen POI-Symbole 02 nicht einzeln nebeneinander darstellbar sind. Aus diesem Grund werden in der Kartenansicht 21 Kombinationssymbole 01 eingeblendet, an deren Anzeigebereich 03 jeweils zeitlich wechselnd die den einzelnen Kombinationssymbolen 01a, 01b und 01c zugeordneten POI-Symbole angezeigt werden. Den beiden Kombinationssymbolen 01a und 01b sind jeweils drei POI-Symbole zugeordnet, so dass die verwendeten Stapelsymbole 04a und 04b jeweils zwei Tafeln 05 bzw. 06 umfassen. Im Ergebnis entspricht also die Anzahl der Tafeln der Stapelsymbole 04a und 04b gerade der Anzahl der dem Kombinationssymbol 01a und 01b zugeordneten POI-Symbole -1. Der Betrachter erhält damit intuitiv den Eindruck, dass der aus Anzeigebereich 03 und den Stapelsymbolen 04a und 04b gebildete Stapel drei Elemente umfasst, die die drei POI-Symbole andeuten. Das Kombinationssymbol 01c dagegen symbolisiert nur zwei POI-Symbole, so dass das verwendete Stapelsymbol 04c nur eine Tafel 05 umfasst.

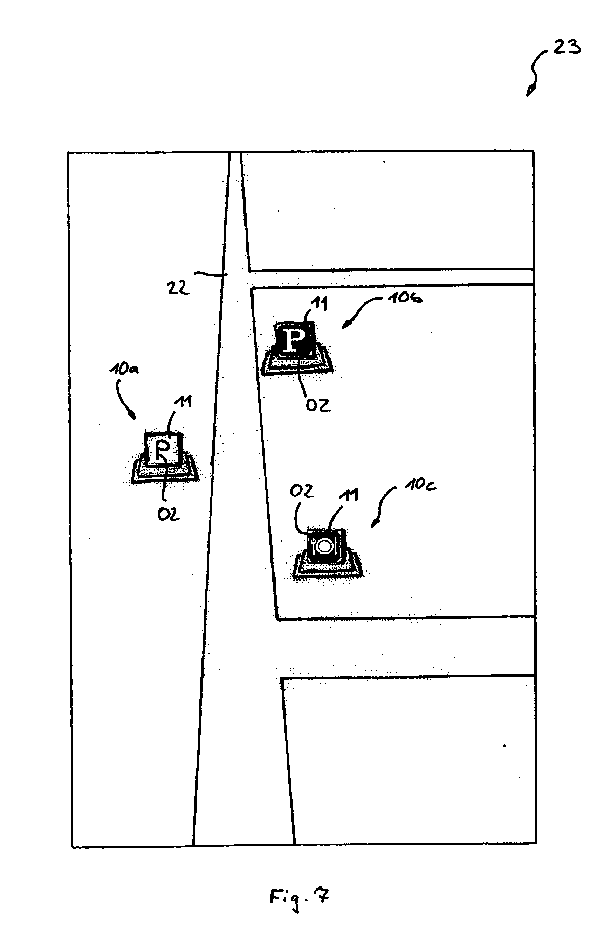

In Fig. 7 ist eine 3D-Darstellung einer Kartenansicht 23, wie sie an einem LCD-Bildschirm eines mobilen Navigationsgerätes angezeigt werden kann, gezeigt. Die verschiedenen POI-Symbole 02 werden zeitlich wechselnd an den Anzeigebereichen 11 von Kombinationssymbolen 10a, 10b und 10c angezeigt. Der Anzeigebereich 11 des Kombinationssymbols 10a ist invers beleuchtet und zeigt ein POI-Symbol 02 in inverser Farbgebung an.

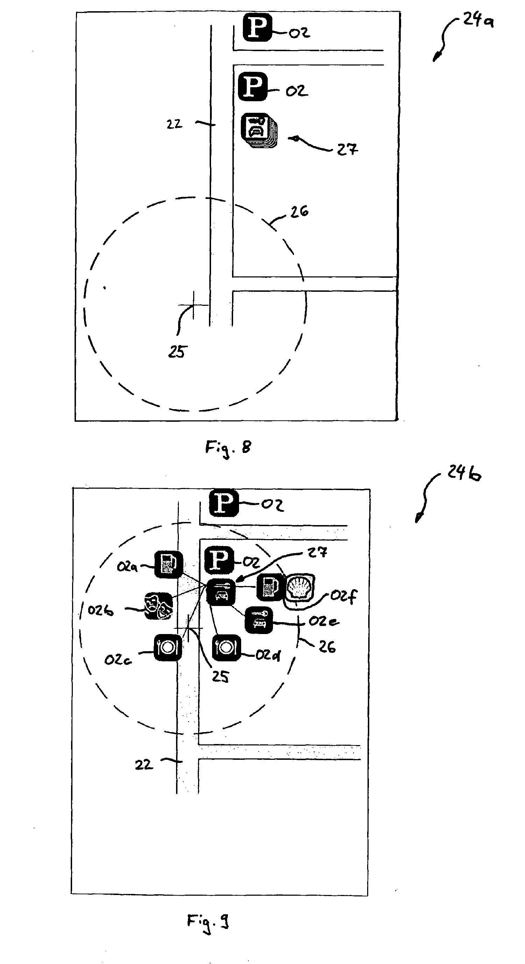

Fig. 8 und Fig. 9 zeigen eine Kartenansicht 24a bzw. 24b in 2D-Darstellung mit einem Kombinationssymbol 27. Neben dem Kombinationssymbol 27 sind weitere POI-Symbole 02 in konventioneller Weise dargestellt.

Aus Fig. 8 und Fig. 9 ist weiter ein Fadenkreuz 25 ersichtlich, das den Mittelpunkt eines Umfangskreises 26 bildet. Der Umfangskreis 26 ist dabei nur zur besseren Erkennbarkeit dargestellt und wird üblicherweise nicht an der Anzeigeneinrichtung des Navigationssystems angezeigt.

Die Position des Fadenkreuzes 25 und dem zugeordneten Umfangskreis 26 kann gemäß einer Variante durch Benutzerinteraktion, beispielsweise durch Bewegen eines Mauszeigers, über die Kartenansicht 24 bewegt werden. Nach einer zweiten Variante ist es auch denkbar, dass das Fadenkreuz 25 gerade immer der aktuellen Position eines Navigationsgeräts entspricht.

Solange das Fadenkreuz 25 relativ weit entfernt vom Kombinationssymbol 27 ist, werden die einzelnen dem Kombinationssymbol zugeordneten POI-Symbole 02a bis 02f rollierend am Anzeigebereich des Kombinationssymbols 27 zeitlich wechselnd angezeigt.

Ist das Fadenkreuz 25, wie in Fig. 9 dargestellt, so weit an das Kombinationssymbol 27 angenähert, dass das Kombinationssymbol 27 innerhalb des Umfangskreises 26 liegt, ist das Kombinationssymbol 27 dadurch angesteuert, und die Darstellung der POI-Symbole ändert sich. Diese Änderung der Darstellung bewirkt, dass alle POI-Symbole 02a gleichzeitig nebeneinander angezeigt werden, um dem Benutzer für diesen Fall der Annäherung unmittelbar einen vollständigen Überblick der POIs an der entsprechenden Lokalität zu geben.

Um zu verdeutlichen, dass alle dargestellten POI-Symbole zu einer Lokation gehören, ist es vorteilhaft, wenn die POI-Symbole als zusammengehörig gekennzeichnet werden. In Fig.9 wird das durch sternförmige Linien, die die POI-Symbole mit der Lokalität verbinden, deutlich gemacht. Alternativ oder zusätzlich kann auch ein Rahmen um die aufgefächerten POI-Symbole gezeichnet werden. Die Positionierung der POI-Symbole nach dem Auffächern ist grundsätzlich beliebig, neben der zentral verschobenen Variante ist auch eine geordnete Aufreihung denkbar.

### Bezugszeichenliste

- 01: Kombinationssymbol
- 02: POI-Symbol
- 03: Anzeigebereich
- 04: Stapelsymbol
- 05: Tafel
- 06: Tafel
- 07: Kombinationssymbol
- 08: Stapelsymbol
- 09: Tafel
- 10: Kombinationssymbol
- 11: Anzeigebereich
- 12: Tafel
- 13: Tafel
- 14: Stapelsymbol
- 15: Kombinationssymbol
- 16: Kombinationssymbol
- 17: Stapelsymbol
- 18: Tafel
- 19: Tafel
- 20: Tafel
- 21: Kartenansicht
- 22: Straße
- 23: Kartenansicht
- 24: Kartenansicht
- 25: Fadenkreuz
- 26: Umfangskreis
- 27: Kombinationssymbol
- 28: Stapelsymbol

## Patentansprüche

1. Verfahren zum Betrieb eines Navigationssystems mit folgenden Verfahrensschritten:
a) Berechnung und Anzeige einer Kartenansicht (21, 24) an einer Anzeigeeinrichtung, wobei die Kartenansicht (21, 24) zumindest einen Ausschnitt eines geographisches Gebiets darstellt;
b) Selektion von den hervorzuhebenden Orten (Points of Interest POI), die im Bereich des dargestellten geographischen Gebiets liegen und in der Kartenansicht jeweils einem POI-Symbol (02) zugeordnet sind, aus einer Datenbank;
c) Darstellung der POI-Symbole (02) in der Kartenansicht(21, 24),
wobei POI-Symbole (02), die hervorzuhebende Orte innerhalb eines gemeinsamen Nahbereichs symbolisieren, als gemeinsames Kombinationssymbol (01, 07, 10, 15, 16, 27) dargestellt werden, so dass jeweils ein Kombinationssymbol (01, 07, 10, 15, 16, 27) mehrere POI-Symbole (02) repräsentiert,
**dadurch gekennzeichnet,**
**dass** das Kombinationssymbol (01, 07, 10, 15, 16, 27) zumindest einen Anzeigebereich (03, 11) aufweist, in dem zumindest ein POI-Symbol (02) darstellbar ist, wobei die dem Kombinationssymbol (01, 07, 10, 15, 16, 27) zugeordneten POI-Symbole (02) zeitlich wechselnd im Anzeigebereich (03, 11) angezeigt werden.

2. Verfahren nach Anspruch 1,
**dadurch gekennzeichnet,**
**dass** der Anzeigebereich (03, 11) des Kombinationssymbols (01, 07, 10, 15, 16, 27), insbesondere durch Betätigung eines Betätigungselements, abschaltbar ist, wobei im abgeschalteten Zustand keine wechselnde Anzeige von POI-Symbolen (02) erfolgt.

3. Verfahren nach Anspruch 1 oder 2,
**dadurch gekennzeichnet,**
**dass** der Anzeigebereich (03, 11) des Kombinationssymbols (01, 07, 10, 15, 16, 27) in einem Grundzustand abgeschaltet ist und durch Ansteuerung des Kombinationssymbols (01, 07, 10, 15, 16, 27) die zeitlich wechselnde Anzeige der POI-Symbole (02) gestartet wird.

4. Verfahren nach einem der Ansprüche 1 bis 3,
**dadurch gekennzeichnet,**
**dass** die POI-Symbole (02) beim Wechsel der Anzeige im Anzeigebereich (03, 11) des Kombinationssymbols (01, 07, 10, 15, 16, 27) überblendet werden.

5. Verfahren nach einem der Ansprüche 1 bis 4,
**dadurch gekennzeichnet,**
**dass** das Kombinationssymbol (01, 07, 10, 15, 16, 27) ansteuerbar ist, um die Darstellung des Kombinationssymbols (01, 07, 10, 15, 16, 27) und/oder der zugeordneten POI-Symbole (02) zu beeinflussen.

6. Verfahren nach Anspruch 5,
**dadurch gekennzeichnet,**
**dass** das Kombinationssymbol (01, 07, 10, 15, 16, 27) durch Betätigung eines Betätigungselements durch den Benutzer ansteuerbar ist.

7. Verfahren nach Anspruch 5,
**dadurch gekennzeichnet,**
**dass** das Navigationssystem in der Art eines mobilen Navigationsgeräts ausgebildet ist, mit dem die aktuelle Position des Navigationsgeräts feststellbar ist, wobei das Kombinationssymbol (27) durch Annäherung der aktuellen Position (25) an das Kombinationssymbol (27) ansteuerbar ist.

8. Verfahren nach einem der Ansprüche 5 bis 7,
**dadurch gekennzeichnet,**
**dass** durch Ansteuerung des Kombinationssymbols (27) mehrere dem Kombinationssymbol zugeordnete POI-Symbole (02a, 02b, 02c, 02d, 02e, 02f), insbesondere alle dem Kombinationssymbol (27) zugeordneten POI-Symbole (02a, 02b, 02c, 02d, 02e, 02f), gleichzeitig nebeneinander angezeigt werden.

9. Verfahren nach einem der Ansprüche 1 bis 8,
**dadurch gekennzeichnet,**
**dass** das Kombinationssymbol (01, 07, 10, 15, 16, 27) neben dem Anzeigebereich (03, 11) ein Stapelsymbol (04, 08, 14, 17, 28) umfasst, das einen Stapel mit zumindest einer Tafel (05, 06, 12, 13, 18, 19, 20) symbolisiert, wobei der Anzeigebereich (03, 11) über dem Stapelsymbol (04, 08, 14, 17, 28) angezeigt wird.

10. Verfahren nach Anspruch 9,
**dadurch gekennzeichnet,**
**dass** die Anzahl der Tafeln (05, 06, 12, 13, 18, 19, 20) des Stapelsymbols (04, 08, 14, 17, 28) von der Anzahl der POI-Symbole (02), die dem Kombinationssymbol (01, 07, 10, 15, 16, 27) zugeordnet sind, abhängt.

11. Verfahren nach Anspruch 8 oder 9,
**dadurch gekennzeichnet,**
**dass** das Kombinationssymbol (01, 07, 27) in einer 2D-Ansicht angezeigt wird, wobei der Anzeigebereich (03) auf dem Stapelsymbol (04, 08) liegend angezeigt wird.

12. Verfahren nach Anspruch 11,
**dadurch gekennzeichnet,**
**dass** das Stapelsymbol (04, 08) zumindest geringfügig größer als der Anzeigebereich (03) dargestellt ist und **dadurch** zumindest ein Rand des Stapelsymbols (04, 08) über den Rand des Anzeigebereichs (03) übersteht.

13. Verfahren nach Anspruch 8 oder 9,
**dadurch gekennzeichnet,**
**dass** das Kombinationssymbol (10, 15, 16) in einer gekippten 3D-Ansicht angezeigt wird, wobei der Anzeigebereich (11) auf dem Stapelsymbol (14, 17, 28) stehend angezeigt wird.

14. Verfahren nach einem der Ansprüche 1 bis 13,
**dadurch gekennzeichnet,**
**dass** das Kombinationssymbol (15, 16) in einer gekippten 3D-Ansicht angezeigt wird, wobei an zumindest einer Tafel (18, 19, 20) des Stapelsymbols (17, 28) jeweils ein dem Kombinationssymbol (15, 16) zugeordnetes POI-Symbol (02) zumindest teilweise, insbesondere zeitlich wechselnd, angezeigt wird.

15. Verfahren nach einem der Ansprüche 1 bis 14,
**dadurch gekennzeichnet,**
**dass** die POI-Symbole (02), insbesondere in einer bestimmten Reihenfolge, periodisch wechselnd am Anzeigebereich (03, 11) angezeigt werden.

16. Verfahren nach einem der Ansprüche 1 bis 15,
**dadurch gekennzeichnet,**
**dass** die Reihenfolge der Anzeige der POI-Symbole (02) im Anzeigebereich (03, 11) durch die vertikale Reihenfolge von, insbesondere in einem mehrstöckigen Gebäude, übereinander angeordneten hervorzuhebenden Orten (POI) definiert wird.

17. Verfahren nach einem der Ansprüche 1 bis 16,
**dadurch gekennzeichnet,**
**dass** den hervorzuhebenden Orten (POI) und/oder den POI-Symbolen (029 jeweils eine Darstellungspriorität zugeordnet ist, wobei die einem Kombinationssymbol (01, 07, 10, 15, 16, 27) zugeordneten POI-Symbole (02) in Abhängigkeit der Darstellungspriorität am Anzeigebereich (03, 11) des Kombinationssymbols angezeigt werden.

18. Verfahren nach einem der Ansprüche 1 bis 17,
**dadurch gekennzeichnet,**
**dass** einem POI-Symbol zumindest ein Zusatz-Symbol zugeordnet ist,
wobei das POI-Symbol und das Zusatz-Symbol zeitlich wechselnd im Anzeigebereich des Kombinationssymbols angezeigt werden.
